# EUROPEAN PATENT SPECIFICATION

(11) **EP 2 584 711 B1**
(45) Date of publication and mention of the grant of the patent: **04.09.2019**
(21) Application number: 11797560.7
(22) Date of filing: 25.05.2011
(51) Int. Cl.: H04W 52/12, H04W 52/20

(54) **OUTER LOOP POWER CONTROL METHOD AND DEVICE**
AUSSENKREIS-LEISTUNGSSTEUERUNGSVERFAHREN UND VORRICHTUNG DAFÜR
PROCÉDÉ ET DISPOSITIF DE RÉGLAGE DE PUISSANCE DE BOUCLE EXTÉRIEURE

(30) Priority: 21.06.2010 CN 201010205871
(43) Date of publication of application: 24.04.2013
(73) Proprietor: ZTE Corporation, Shenzhen, Guangdong 518057 (CN)
(72) Inventor: CHEN, Guixian, Shenzhen Guangdong 518057 (CN); XU, Haiyan, Shenzhen Guangdong 518057 (CN); LU, Hongtao, Shenzhen Guangdong 518057 (CN); SHU, Ruijun, Shenzhen Guangdong 518057 (CN); ZHAO, Zhe, Shenzhen Guangdong 518057 (CN)
(74) Representative: Novagraaf Technologies
(86) International application number: PCT/CN2011/074673
(87) International publication number: WO 2011/160529

(56) References cited:
- EP-A1- 1 895 682
- WO-A1-2007/119753
- CN-A- 1 423 439
- CN-A- 1 499 755
- CN-A- 1 684 384
- CN-A- 1 691 533
- CN-A- 1 722 633
- CN-A- 1 815 911
- CN-A- 1 949 676
- CN-A- 1 993 897
- CN-A- 101 068 121
- CN-A- 101 170 326
- CN-A- 101 207 421
- CN-A- 101 345 558
- CN-A- 101 640 556
- GB-A- 2 407 233

## Description

### Field of the Invention

The present invention relates to the power control technology, and in particular to a method and an apparatus for controlling outer loop power in a Wideband Code Division Multiple Access (WCDMA) system.

### Background of the Invention

With the development of the information technology, mobile communication becomes indispensable in people's daily life. Wideband Code Division Multiple Access (WCDMA) smoothly evolves into one of the most important technologies in the 3G standards with its mature technology and flexible architecture.

The WCDMA system uses a code division multiple access communication mode. There is a mutually interfered relationship among users, and the signals from remote users may be drowned in those from adjacent users, i.e. near-far effect occurs. In order to effectively overcome such near-far effect, resist the fading in the wireless environment, save the electric quantity of the mobile terminal, and improve system capacity, the transmission power needs to be controlled, and thereby meeting the normal communication requirements is achieved and the transmission power is not wasted, so power control becomes one of the core technologies of WCDMA.

Power control mainly comprises: inner loop power control and outer loop power control. The outer loop power control dynamically adjusts the Signal to Interference Ratio target value (SIRstarget) according to the prescriptive Block Error Rate (BLER)/Frame Error Rate (FER)/Bit Error Rate (BER). If it is measured that the BLER/FER/BER is higher than the prescriptive value, then the SIRtarget is raised; and if it is measured that the BLER/FER/BER is lower than the prescriptive value, then the SIRtarget is lowered. The inner loop power control dynamically adjusts the transmission power according to the value of SIRtarget, so as to converge the Signal to Interference Ratio (SIR) to the SIRtarget.

Currently, the general act for the outer loop power control in the industries is as follows: a tolerance period AcP, an error threshold ENum, an up step size UStep, and a down step size DStep are set. When there are error blocks more than ENum within the tolerance period in the received data blocks, the SIRtarget is immediately up-regulated by UStep, and the counter is reset; and if the number of the error blocks is smaller than or equal to ENum, then the SIRtarget is down-regulated by UStep when the tolerance period is ended, and the counter is reset. By such policy, the SIRtarget can be up-regulated in time when the channel deteriorates, but when the channel is improved, it takes longer to measure the BLER, which causes that there is a prevalent phenomena of fast up-regulation and slow down-regulation in the current power control.

The effect of the slow down-regulation phenomena is especially severe in the following situations: (1) in order to maintain a better call completion rate, usually a relatively high initial value will be configured for the SIRtarget; (2) when the terminal passes through an area with the limited uplink signal, the SIRtarget will rapidly increase to the maximum; and (3) in the situation where the channel changes from being severe to better, it takes longer to converge from these states to the normal working point, and the transmission power of terminals and the cell capacity are wasted.

As to such phenomena of fast up-regulation and slow down-regulation, currently there are many patent technologies, but there are still lots of defects.

The following technical solution is proposed in a China patent technology with the publication number CN1486100A, the publication date 31 March, 2004, and the title of the invention "A self-adaptive outer loop power control method and system based on bit error rate measurement": the convergence of the SIRtarget can be accelerated by converting the BLER value required by a service into a BER value and adjusting the SIRtarget using the measured BER value, but since the BERs of different channels are various, it is hard to ensure the quality of services under different channels.

The following technical solution is proposed in a China patent technology with the publication number CN1691533A, the publication date 2 November, 2005, and the title of the invention "A power control method": the SIRtarget is determined to be up-regulated or down-regulated by setting the target BER according to the measured BLER and comparing the measured BER of the dedicated physical control channel with the Bit Error Rate target value (BERtarget). Since the measurement time of the BLER is relatively long, it will also cause that the lowering of the BERtarget is rather slow and the jitter of SIRtarget is too large. Even when the channel changes from being bad to good, the BERtarget is too high, which will cause that the SIRtarget rapidly lowers below the normal working point, the BLER becomes worse and the BERtarget is raised, and thereby the BERtarget cannot be lowered and the power control is failed.

Documents D1(WO 2007/119753), D2 (EP1895682) and D3 (GB2407233) provide related technical solutions; however, the above-menioned problem still remains unsolved.

### Summary of the Invention

A method for controlling outer loop power is provided by the present invention to accelerate the convergence of the SIRtarget with the premise of ensuring the quality of services.

An apparatus for controlling outer loop power is provided by the present invention to accelerate the convergence of the SIRtarget with the premise of ensuring the quality of services.

The invention is defined by the appended independent claims. Dependent claims constitute embodiments of the invention. Any other subject-matter outside the scope of the claims is to be regarded as an example not in accordance with the invention.

Compared with the related art, the beneficial effects of the present invention are as follows: a method for accelerating the convergence of the signal to interference ratio is provided by the present invention with the premise of ensuring the quality of services, which not only can ensure the minimum signal to interference ratio required by the services but also can accelerate the convergence speed of the signal to interference ratio.

### Brief Description of the Drawings

Fig. 1 is a flow chart of a method for controlling outer loop power according to the present invention;
Fig. 2 is a structural schematic diagram of an apparatus for controlling outer loop power according to the present invention;
Fig. 3 is a flow chart of conventional outer loop power control in the related art;
Fig. 4 is a flow chart of outer loop power control according to the present invention; and
Fig. 5 is a comparison diagram of test effects in the related art and test effects of a method of the present invention in a real environment according to one embodiment of the present invention.

### Detailed Description of Embodiments

The detailed description is given to the preferred embodiments of the present invention with reference to the drawings. It should be noted that the preferred embodiments of the present invention are described for the purpose of illustration and explanation, not for limiting the present invention.

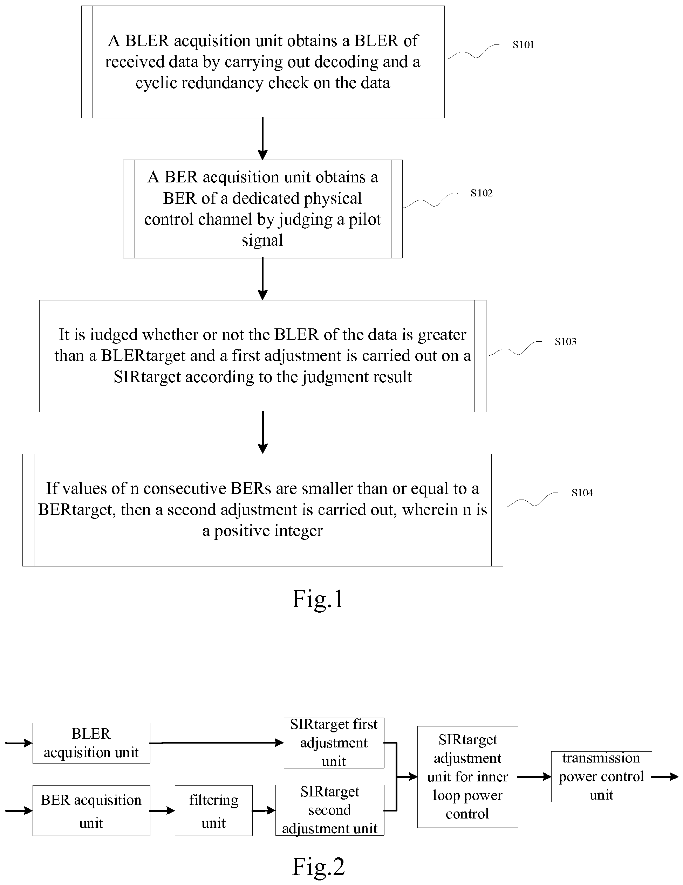

Fig. 1 shows the procedure of a method for controlling outer loop power according to the present invention, and as shown in Fig. 1, the outer loop power control method according to the present invention comprises the steps as follows.

Step S101: a BLER acquisition unit obtains a BLER of received data by carrying out decoding and a cyclic redundancy check on the data.

A NodeB side completes the acquisition process of the BLER by means of two steps of carrying out decoding and a Cyclic Redundancy Check (CRC) on the received data and sends the acquired BLER to a Radio Network Controller (RNC) side.

Step S102: a bit error rate acquisition unit obtains a BER of a dedicated physical control channel by judging a pilot signal.

The acquisition process of the BER is also completed at the NodeB side, and the NodeB side also sends the obtained BER to the RNC side.

Step S103: it is judged that whether or not the BLER of the data is greater than a BLERtarget and a first adjustment on the SIRstarge is carried out according to the judgment result.

An UStep and a DStep in the first adjustment are preset, if the BLER is greater than the BLERtarget, then the UStep of the SIRtarget is up-regulated; and if the BLER is smaller than or equal to the BLERtarget, then the DStep of the SIRtarget is down-regulated and the counter in the RNC is reset.

Step S104: if values of n consecutive BERs are smaller than or equal to a Bit Error Rate target value (BERtarget), then a second adjustment is carried out, wherein n is a positive integer.

When there is a new data block coming, firstly filtering on the BER of the data is carried out, and it is judged whether the filtered BER is smaller than or equal to the BERtarget. If the BER is greater than the BERtarget, then the counter is reset, and if the BER is smaller than or equal to the BERtarget, then the counter is raised by 1, and if the count value in the counter reaches the preset maximum value, then down-regulation on the BERtarget is carried out and the counter is reset, wherein the DStep in the second adjustment is preset.

If the second adjustment and the down-regulation operation in the first adjustment are triggered simultaneously, then only the first adjustment is carried out.

During the above adjustment process of the SIRtarget, the adjusted SIRtarget must be greater than or equal to the set minimum SIRtarget and smaller than or equal to the maximum SIRtarget.

After the SIRtarget is adjusted, the SIRtarget adjustment unit of the inner loop power control takes the adjusted SIRtarget as the SIRtarget of the inner loop power control, and then the transmission power control unit sends a transmission power control command to a user equipment according to the comparison result of the SIRtarget of the inner loop power control and the SIR.

Fig. 2 is a structural schematic diagram of an outer loop power control according to the present invention, and as shown in Fig. 2, this apparatus comprises a BLER acquisition unit, a bit error rate acquisition unit, a filtering unit, a SIRtarget first adjustment unit, a SIRtarget second adjustment unit, a SIRtarget adjustment unit for inner loop power control and a transmission power control unit, and the function of each unit is as follows.

The BLER acquisition unit is configured to obtain a BLER of received data by carrying out decoding and a cyclic redundancy check on the data.

This unit is configured in a NodeB and sends the BLER obtained by check to the SIRtarget first adjustment unit.

The bit error rate acquisition unit is configured to obtain a BER of a dedicated physical control channel by judging a pilot signal.

This unit is configured in the NodeB and sends the obtained BER to the filtering unit.

The filtering unit is configured to carry out filtering processing on the BER in a new data block, and if there is no new data block, then it is considered that the obtained BER is an old BER and processing thereon will not be carried out.

The SIRtarget first adjustment unit is configured to judge whether the BLER of the data is greater than a BLER target value (BLERtarget) and carry out a first adjustment on the SIRtarget according to the judgment result.

An UStep and a DStep in the first adjustment are preset. If the BLER is greater than the BLERtarget, then the UStep of the SIRtarget is up-regulated; and if the BLER is smaller than or equal to the BLERtarget, then the DStep of the SIRtarget is down-regulated and the counter in an RNC is reset.

The SIRtarget second adjustment unit is configured to carry out a second adjustment if n consecutive BERs are smaller than or equal to a Bit Error Rate Target value (BERtarget), wherein n is a positive integer.

When there is a new data block coming, firstly filtering on the BER of the data is carried out, and it is judged whether the filtered BER is smaller than or equal to the BERtarget. If the BER is greater than the BERtarget, then reset the counter, and if the BER is smaller than or equal to the BERtarget, then the counter is raised by 1, and if the count value in the counter reaches the preset maximum value, then down-regulation on the BERtarget is carried out and the counter is reset, wherein the DStep in the second adjustment is preset.

If the second adjustment and the down-regulation operation in the first adjustment are triggered simultaneously, then only the first adjustment is carried out.

During the above adjustment process of the SIRtarget, the adjusted SIRtarget must be greater than or equal to the set minimum SIRtarget and smaller than or equal to the maximum SIRtarget.

The SIRtarget adjustment unit for inner loop power control is configured to take the adjusted SIRtarget as the SIRtarget for the inner loop power control.

The transmission power control unit is configured to send a transmission power control command to a user equipment according to the comparison result of the SIRtarget of the inner loop power control and the signal to interference ratio.

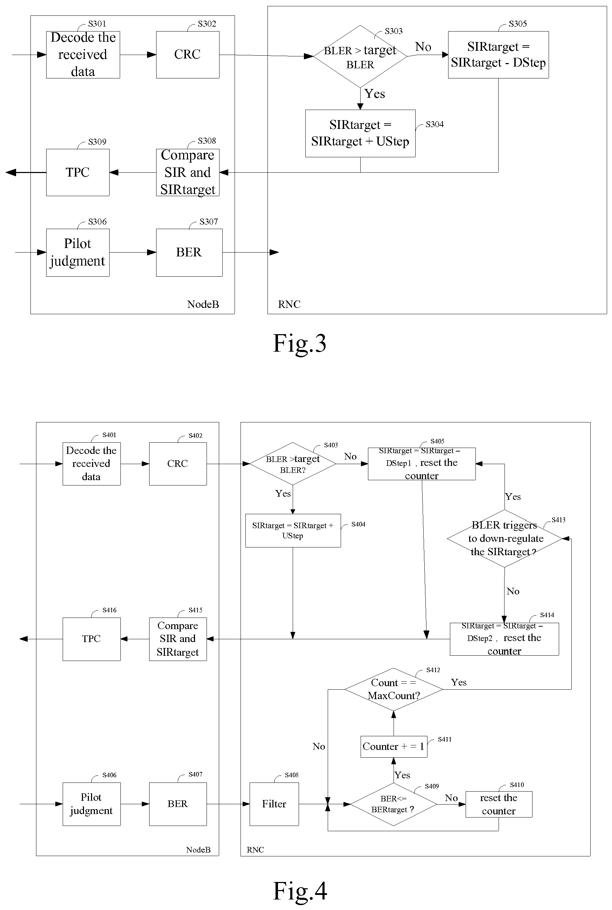

Fig. 3 shows the procedure of conventional outer loop power control in the related art, and as shown in Fig. 3, the outer loop power control comprises the steps as follows.

Step S301: decoding is carried out on received data.

Step S302: a CRC is carried out on the decoded data to obtain a BLER.

Step S303: a size relationship between the BLER and a BLERtarget is judged within a tolerance period.

Before this step, a tolerance period AcP, an error threshold ENum, an up-regulating step DStep, and a down-regulating step DStep are set.

Step S304: when it appears that the number of error blocks is greater than ENum error blocks within the tolerance period, the SIRtarget is up-regulated by the UStep.

Step S305: when it appears that the number of error blocks is smaller than or equal to ENum error blocks within the tolerance period, the SIRtarget is down-regulated by the DStep.

Step S306: a pilot judgment is carried out on a dedicated physical control channel.

Step S307: a BER of the dedicated physical control channel is obtained by calculation and the BER is sent together with a FR frame to an RNC.

Step S308: the adjusted SIRtarget is taken as the SIRtarget of inner loop power control; and

Step S409: a transmission power control command is sent to a user equipment according to the SIRtarget of the inner loop power control via transmission power control.

Fig. 4 shows the procedure of outer loop power control according to one embodiment of the present invention, and as shown in Fig. 4, the outer loop power control according to the present invention comprises the steps as follows.

Step S401: decoding is carried out on received data.

Step S402: a CRC is carried out on the decoded data to obtain a BLER.

Step S403: a size relationship between the BLER and a BLERtarget is judged within a tolerance period.

Before this step, a tolerance period AcP, an error threshold ENum, an up-regulating step DStep, and a down-regulating step DStep are set.

Step S404: when it appears that the number of error blocks is greater than ENum error blocks within the tolerance period, the SIRtarget is up-regulate by the UStep.

Step S405: when it appears that the number of error blocks is smaller than ENum error blocks within the tolerance period, the SIRtarget is down-regulated by the DStep and the counter Count is reset.

Different AcPs, Enums, and initial SIRtargets are set according to different services, which can ensure the quality of services required by various services.

Step S406: a pilot judgment is carried out on a dedicated physical control channel.

Step S407: a BER of the dedicated physical control channel is obtained by calculation and the BER is sent together with a frame packet (FP) to an RNC.

Step S408: the RNC carries out a judgment on the received BER. If there is no new data block, then it is considered that the received BER is an old BER and processing thereon will not be carried out, and if it is a new value, then a filtering operation is carried out, and the filtering equation is as follows.

*Fₙ* = (1- *a*)·*F*_{*n*-1} + *a·Mₙ*, *a* = 1/2^{*k*/2}, wherein K is a filtering coefficient, with values thereof being 0, 1, 2, ..., 14; Mn is the BER of currently new received data, Fn is the BER to be solved after filtering, and F(n-1) is the BER after the previous filtering.

Step S409: the RNC compares the filtered BER and the preset BERtarget.

Step S410: if BER > BERtarget, then Count is reset.

Step S411: if BER <= BERtarget, then the counter Count is raised by 1.

Step S412: it is judged whether or not the Count is equal to a preset maximum count value MaxCount. If Count != MaxCount, then Count is reset, and if Count = MaxCount, then the step S413 is performed.

Step S413: it is judged whether or not the BLER triggers the down-regulation of the SIRtarget. If the BLER triggers the down-regulation, then only carry out the SIRtarget down-regulating operation triggered by the BLER, and if the BLER does not trigger the down-regulation, then perform the step S414.

Step S414: the SIRtarget is down-regulated by the DStep and at the same time Count is reset.

During the above adjustment process of the SIRtarget, the adjusted SIRtarget must be greater than or equal to the minimum SIRtarget and smaller than or equal to the maximum SIRtarget.

Step S415: the adjusted SIRtarget is taken as the SIRtarget of inner loop power control; and

Step S416: a transmission power control command is sent to a user equipment according to the SIRtarget of the inner loop power control via transmission power control.

The parameters in the algorithm will greatly affect the adjustment frequency of the SIRtarget, wherein
the smaller the K value, the less the BER value being affected by the previous accumulated measurement value, the more the burr of the BER waveform, and if k = 0, then a = 1 and F(n) = M(n); and the bigger the K value, the more the QE value being affected by the previous accumulated measurement value, the more stable and softer the BER waveform, and if k = 14, then F(n) = 0.99F (n-1) + 0.01M (n);
the bigger the MaxCount value, the stricter the condition, the less obvious the accelerated convergence effect; and the smaller the MaxCount value, the looser the condition, the more obvious the accelerated convergence effect, but the bigger the fluctuation; and
the bigger the BERtarget value, the easier to trigger the down-regulation of the SIRtarget, and if BERtarget = 100%, then the down-regulation of the SIRtarget will be triggered each time; and the smaller the BERtarget value, the less easy to trigger the down-regulation of the SIRtarget, and if BERtarget = 0, then the down-regulation of the SIRtarget will not be triggered each time.

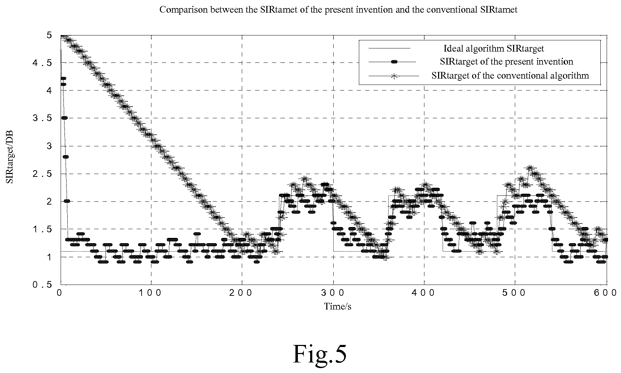

Fig. 5 shows a comparison diagram of test effects in the related art and test effects of a method of the present invention in a real environment according to one embodiment of the present invention, and as shown in Fig. 5.

The voice service cs12.2k is taken as an example, sending will be carried out with a full rate, and the transmission time interval TTI is 20 ms, i.e. one data block is generated every 20 ms. The parameter configuration of the present invention is as follows.
(1) Conventional algorithm:
   Tolerance period: 250
   Error threshold: 2
   Up step size: 0.3 db
   Down step size: 0.1 db
(2) BER portion of the present invention:
   Filtering coefficient: k = 3
   Count length: MaxCount = 5
   Target BER: BERtarget = 4.5%
   Down step size: 0.1 db

It can be known from the above parameters that: the minimum time for the conventional algorithm to down-regulate one step is 250 × 20 ms = 5 s, and the minimum time for the present invention to down-regulate one step is 5 × 20 ms = 0.1 s, so in terms of the mininum time of down-regulation, the down-regulation speed of the present invention is 50 times of the down-regulation speed of the conventional algorithm. Since the following requirement should also be met: values of 5 consecutive BER are smaller than or equal to the BERtarget, the convergence speed will be much smaller than the theoretical value.

The initial SIRtarget of the Cs12.2k voice service is configured as 5 db. In the first 240s, the channel is a Additive White Gaussian Noise (AWGN) channel, and in the following 360 s, the channel is switched between the AWGN channel and the case3 channel, with the switch interval being 60 s. During the test, in order to achieve that the BLER is 0.8%, the average values of the SIRtarget on the AWGN channel and the case3 channel are 1.1 db and 2.1 db respectively.

It can be known by analyzing Fig. 5 as follows.

It takes 193s for the conventional algorithm to lower from 5 db to 1.3 db, takes 200 s to lower to 1.1 db, and takes about 50 s for the convergence from the case3 channel to the AWGN channel. During the entire test, the average SIRtarget is 2.22 db, and the average SIRtarget is 1.75 db during the switching process after the convergence.

In the present invention, it takes 8s to lower from 5 db to 1.3 db, takes 35 s to lower to 1.1 db, and takes about 3-5 s for the convergence from the case3 channel to the AWGN channel. During the entire test, the average SIRtarget is 1.43 db, and the average SIRtarget is 1.41 db during the switching process after the convergence.

It can be known by comparison that: the initial convergence speed of the present invention (converged to 1.3 db) is 2.4 times of the initial convergence speed of the conventional algorithm, and can rapidly adapt to the change of the channel. Compared with the conventional art, the average SIRtarget during the entire call in the present invention is lower by 0.79 db, and the average SIRtarget during the switching process after the convergence is lower by 0.34 db, which means that the transmission power during the call in the present invention can be saved by 0.79 db, and the cell capacity can be improved by 19.9%.

In summary, the present invention has the following technical effects: 1. the quality of services can be well ensured. When the channel deteriorates, the SIRtarget can be rapidly raised by the conventional outer loop power control to ensure the minimum SIR required by the services. 2. the transmission power can be saved as much as possible and the cell capacity can be improved. The filtering coefficient k, the BERtarget and the count length MaxCount are set, all of which are adjustable parameters, and different BERtargets can be set according to particular services. 3. the convergence of the SIRtarget is assisted by the bit error rate of the dedicated physical control channel. 4. the NodeB side does not need to be made any modification and only a small amount of calculation is needed at the RNC side. 5. the convergence speed of the present invention is scores of times of the speed of the conventional art. The conventional algorithm takes the BLER as a convergence basis, the convergence speed of the voice service is typically one step by 5s; and the BER of the dedicated physical control channel is assisted by the convergence of the present invention, and the convergence speed is one step by scores of milliseconds to hundreds of milliseconds.

Although the present invention has been described in detail by the above description, the present invention is not limited to the above description, and those skilled in the art can make various modifications according to the principles of the present invention. Therefore, any modifications made according to the principles of the present invention shall fall into the scope of protection of the present invention.

## Claims

1. A method for controlling outer loop power, comprising:
obtaining a Block Error Rate (BLER) of received data by carrying out decoding and a cyclic redundancy check on the data (S101); and
judging whether the BLER of the data is greater than a Block Error Rate target value (BLERtarget), and carrying out a first adjustment on a Signal to Interference Ratio target value (SIRtarget) according to the judgment result (S103);
obtaining a Bit Error Rate (BER) of a dedicated physical control channel by judging a pilot signal (S102); and
if values of n consecutive BERs are smaller than or equal to a Bit Error Rate target value (BERtarget), then carrying out a second adjustment, wherein n is a positive integer (S104).

2. The method for controlling outer loop power according to Claim 1, **characterized in that** the first adjustment comprises up-regulating the SIRtarget or down-regulating the SIRtarget.

3. The method for controlling outer loop power according to Claim 1, **characterized in that** after the second adjustment, the method further comprises:
taking the adjusted SIRtarget as a SIRtarget of inner loop power control; and
sending a transmission power control command to a user equipment via transmission power control.

4. The method for controlling outer loop power according to Claim 2, **characterized in that** the second adjustment is down-regulating the SIRtarget.

5. The method for controlling outer loop power according to Claim 3, **characterized in that** if the BLER is greater than the BLERtarget, then the SIRtarget is up-regulated according to the first adjustment; and if the BLER is smaller than or equal to the BLERtarget, then SIRtarget is down-regulated according to the first adjustment.

6. The method for controlling outer loop power according to Claim 1, **characterized in that** when receiving a new data block, a judgment whether the values of n consecutive BERs are smaller than or equal to the Bit Error Rate Target value (BERtarget) is executed, and filtering processing is carried out on a BER of a received new data block when receiving the new data block.

7. The method for controlling outer loop power according to Claim 5, **characterized in that** when the values of n consecutive BERs are smaller than or equal to the BERtarget and down-regulating the SIRtarget in the first adjustment is not triggered, the second adjustment is carried out.

8. The method for controlling outer loop power according to Claim 5, **characterized in that** up-regulating the SIRtarget and down-regulating the SIRtarget are adjusted with a step size.

9. An apparatus for controlling outer loop power, comprising:
a Block Error Rate (BLER) acquisition unit, configured to obtain a BLER of received data by carrying out decoding and a cyclic redundancy check on the data; and
a Signal to Interference Ratio Target value (SIRtarget) first adjustment unit, configured to judge whether the BLER of the data is greater than a Block Error Rate target value (BLERtarget) and carry out a first adjustment on an SIRtarget according to the judgment result;
a Bit Error Rate (BER) acquisition unit, configured to obtain a BER of a dedicated physical control channel by judging a pilot signal; and
a SIRtarget second adjustment unit, configured to carry out a second adjustment if n consecutive BERs are smaller than or equal to a Bit Error Rate target value (BERtarget), wherein n is a positive integer.

10. The apparatus for controlling outer loop power according to Claim 9, **characterized in that** the apparatus further comprises:
an SIRtarget adjustment unit for inner loop power control, configured to take the adjusted SIRtarget as a SIRtarget of inner loop power control; and
a transmission power control unit, configured to send a transmission power control command to a user equipment according to a comparison result of the SIRtarget of the inner loop power control and a Signal to Interference Ratio (SIR).

11. The apparatus for controlling outer loop power according to Claim 10, **characterized in that** the apparatus further comprises a filtering unit, configured to carry out filtering processing on the BER before judging whether the BER of the data is greater than the BERtarget.

12. The apparatus for controlling outer loop power according to Claim 9, **characterized in that** the block error rate acquisition unit and the BER acquisition unit are configured at a Base Station (NodeB) side, and the SIRtarget first adjustment unit and the SIRtarget second adjustment unit are configured at a Radio Network Controller (RNC) side.

## Patentansprüche

1. Verfahren zur Steuerung der Leistung einer äußeren Schleife, umfassend:
Erhalten einer Blockfehlerrate (BLER) von empfangenen Daten durch Durchführen von Decodierung und einer zyklischen Redundanzprüfung an den Daten (S101); und
Beurteilen, ob die BLER der Daten größer ist als ein Blockfehlerraten-Zielwert (BLERtarget), und Durchführen einer ersten Anpassung an einem Signal-Interferenz-Verhältnis-Zielwert (SIRtarget) gemäß dem Beurteilungsergebnis (S103);
Erhalten einer Bitfehlerrate (BER) eines dedizierten physikalischen Steuerkanals durch Beurteilen eines Pilotsignals (S102); und
wenn Werte von n aufeinanderfolgenden BERs, wobei n eine positive ganze Zahl ist, kleiner als oder gleich einem Bitfehlerraten-Zielwert (BERtarget) sind, dann Durchführen einer zweiten Anpassung (S104).

2. Verfahren zur Steuerung der Leistung einer äußeren Schleife nach Anspruch 1, **dadurch gekennzeichnet, dass** die erste Anpassung das Hochregulieren des SIRtarget oder Herabregulieren des SIRtarget umfasst.

3. Verfahren zur Steuerung der Leistung einer äußeren Schleife nach Anspruch 1, **dadurch gekennzeichnet, dass** das Verfahren nach der zweiten Anpassung weiter umfasst:
Heranziehen des angepassten SIRtarget als ein SIRtarget für Leistungssteuerung einer inneren Schleife; und
Senden eines Übertragungsleistungssteuerungsbefehls über eine Übertragungsleistungssteuerung an eine Benutzerausrüstung.

4. Verfahren zur Steuerung der Leistung einer äußeren Schleife nach Anspruch 2, **dadurch gekennzeichnet, dass** die zweite Anpassung das Herabregulieren des SIRtarget ist.

5. Verfahren zur Steuerung der Leistung einer äußeren Schleife nach Anspruch 3, **dadurch gekennzeichnet, dass** wenn die BLER größer ist als der BLERtarget, dann der SIRtarget gemäß der ersten Anpassung hochreguliert wird; und wenn die BLER kleiner als oder gleich dem BLERtarget ist, dann der SIRtarget gemäß der ersten Anpassung herabreguliert wird.

6. Verfahren zur Steuerung der Leistung einer äußeren Schleife nach Anspruch 1, **dadurch gekennzeichnet, dass** wenn ein neuer Datenblock empfangen wird, eine Beurteilung ausgeführt wird, ob die Werte von n aufeinanderfolgenden BERs kleiner als oder gleich dem Bitfehlerraten-Zielwert (BERtarget) sind, und Filterverarbeitung an einer BER eines empfangenen neuen Datenblocks durchgeführt wird, wenn der neue Datenblock empfangen wird.

7. Verfahren zur Steuerung der Leistung einer äußeren Schleife nach Anspruch 5, **dadurch gekennzeichnet, dass** wenn die Werte von n aufeinanderfolgenden BERs kleiner als oder gleich dem BERtarget sind und Herabregulieren des SIRtarget in der ersten Anpassung nicht ausgelöst wird, die zweite Anpassung durchgeführt wird.

8. Verfahren zur Steuerung der Leistung einer äußeren Schleife nach Anspruch 5, **dadurch gekennzeichnet, dass** das Hochregulieren des SIRtarget und Herabregulieren des SIRtarget mit einer Schrittgröße angepasst werden.

9. Vorrichtung zur Steuerung der Leistung einer äußeren Schleife, umfassend:
eine Blockfehlerraten- (BLER) Erfassungseinheit, die dazu konfiguriert ist, eine BLER von empfangenen Daten durch Durchführen von Decodierung und einer zyklischen Redundanzprüfung an den Daten zu erhalten; und
eine Signal-Interferenz-Verhältnis-Zielwert-(SIRtarget) Erstanpassungseinheit, die dazu konfiguriert ist, zu beurteilen, ob die BLER der Daten größer ist als ein Blockfehlerraten-Zielwert (BLERtarget), und gemäß dem Beurteilungsergebnis eine erste Anpassung an einem SIRtarget durchzuführen;
eine Bitfehlerraten- (BER) Erfassungseinheit, die dazu konfiguriert ist, eine BER eines dedizierten physikalischen Steuerkanals durch Beurteilen eines Pilotsignals zu erhalten; und
eine SIRtarget-Zweitanpassungseinheit, die dazu konfiguriert ist, eine zweite Anpassung durchzuführen, wenn n aufeinanderfolgende BERs, wobei n eine positive ganze Zahl ist, kleiner als oder gleich einem Bitfehlerraten-Zielwert (BERtarget) sind.

10. Vorrichtung zur Steuerung der Leistung einer äußeren Schleife nach Anspruch 9, **dadurch gekennzeichnet, dass** die Vorrichtung weiter umfasst:
eine SIRtarget-Anpassungseinheit zur Leistungssteuerung einer inneren Schleife, die dazu konfiguriert ist, den anpassten SIRtarget als einen SIRtarget für Leistungssteuerung einer inneren Schleife heranzuziehen; und
eine Übertragungsleistungssteuerungseinheit, die dazu konfiguriert ist, einen Übertragungsleistungssteuerungsbefehl gemäß einem Vergleichsergebnis des SIRtarget der Leistungssteuerung einer inneren Schleife und eines Signal-Interferenz-Verhältnisses (SIR) an eine Benutzerausrüstung zu senden.

11. Vorrichtung zur Steuerung der Leistung einer äußeren Schleife nach Anspruch 10, **dadurch gekennzeichnet, dass** die Vorrichtung weiter eine Filtereinheit umfasst, die dazu konfiguriert ist, vor dem Beurteilen, ob die BER der Daten größer ist als der BERtarget, Filterverarbeitung an der BER durchzuführen.

12. Vorrichtung zur Steuerung der Leistung einer äußeren Schleife nach Anspruch 9, **dadurch gekennzeichnet, dass** die Blockfehlerraten-Erfassungseinheit und die BER-Erfassungseinheit auf Seite einer Basisstation (NodeB) konfiguriert werden, und die SIRtarget-Erstanpassungseinheit und die SIRtarget-Zweitanpassungseinheit auf Seite einer Funknetzsteuerung (RNC) konfiguriert werden.

## Revendications

1. Procédé de réglage de puissance de boucle extérieure, comprenant :
l'obtention d'un taux d'erreurs sur les blocs (BLER) de données reçues par l'exécution d'un décodage et d'un contrôle par redondance cyclique sur les données (S101) ; et
le fait de juger si le BLER des données est supérieur à une valeur cible de taux d'erreurs sur les blocs (BLERtarget), et l'exécution d'un premier ajustement sur une valeur cible de rapport signal sur interférences (SIRtarget) selon le résultat de jugement (S103) ;
l'obtention d'un taux d'erreurs sur les bits (BER) d'un canal de contrôle physique dédié par le jugement d'un signal pilote (S102) ; et
si des valeurs de n BER consécutifs sont inférieures ou égales à une valeur cible de taux d'erreurs sur les bits (BERtarget), alors l'exécution d'un second ajustement, dans lequel n est un nombre entier positif (S104).

2. Procédé de réglage de puissance de boucle extérieure selon la revendication 1, **caractérisé en ce que** le premier ajustement comprend une régulation vers le haut du SIRtarget ou une régulation vers le bas du SIRtarget.

3. Procédé de réglage de puissance de boucle extérieure selon la revendication 1, **caractérisé en ce que**, après le second ajustement, le procédé comprend en outre :
le fait de prendre le SIRtarget ajusté comme SIRtarget de réglage de puissance de boucle interne ; et
l'envoi d'une commande de réglage de puissance d'émission à un équipement d'utilisateur via un réglage de puissance d'émission.

4. Procédé de réglage de puissance de boucle extérieure selon la revendication 2, **caractérisé en ce que** le second ajustement est une régulation vers le bas du SIRtarget.

5. Procédé de réglage de puissance de boucle extérieure selon la revendication 3, **caractérisé en ce que** si le BLER est supérieur au BLERtarget, alors le SIRtarget est régulé vers le haut selon le premier ajustement ; et si le BLER est inférieur ou égal au BLERtarget, alors le SIRtarget est régulé vers le bas selon le premier ajustement.

6. Procédé de réglage de puissance de boucle extérieure selon la revendication 1, **caractérisé en ce que**, lorsqu'un nouveau bloc de données est reçu, un jugement si les valeurs de n BER consécutifs sont inférieures ou égales à la valeur cible de taux d'erreurs sur les bits (BERtarget) est effectué, et le traitement de filtrage est exécuté sur un BER d'un nouveau bloc de données reçu lorsque le nouveau bloc de données est reçu.

7. Procédé de réglage de puissance de boucle extérieure selon la revendication 5, **caractérisé en ce que**, lorsque les valeurs de n BER consécutifs sont inférieures ou égales au BERtarget et une régulation vers le bas du SIRtarget dans le premier ajustement n'est pas déclenchée, le second ajustement est exécuté.

8. Procédé de réglage de puissance de boucle extérieure selon la revendication 5, **caractérisé en ce qu'**une régulation vers le haut du SIRtarget et une régulation vers le bas du SIRtarget sont ajustées avec une taille de pas.

9. Appareil de réglage de puissance de boucle extérieure, comprenant :
une unité d'acquisition de taux d'erreurs sur les blocs (BLER), configurée pour obtenir un BLER de données reçues par exécution d'un décodage et d'un contrôle par redondance cyclique sur les données ; et
une première unité d'ajustement de valeur cible de rapport signal sur interférences (SIRtarget), configurée pour juger si le BLER des données est supérieur à une valeur cible de taux d'erreurs sur les blocs (BLERtarget) et exécuter un premier ajustement sur un SIRtarget selon le résultat de jugement ;
une unité d'acquisition de taux d'erreurs sur les bits (BER), configurée pour obtenir un BER d'un canal de contrôle physique dédié par jugement d'un signal pilote ; et
une seconde unité d'ajustement de SIRtarget, configurée pour exécuter un second ajustement si n BER consécutifs sont inférieurs ou égaux à une valeur cible de taux d'erreurs sur les bits (BERtarget), dans lequel n est un nombre entier positif.

10. Appareil de réglage de puissance de boucle extérieure selon la revendication 9, **caractérisé en ce que** l'appareil comprend en outre :
une unité d'ajustement de SIRtarget pour un réglage de puissance de boucle interne, configurée pour prendre le SIRtarget ajusté en tant que SIRtarget de réglage de puissance de boucle interne ; et
une unité de réglage de puissance d'émission, configurée pour envoyer une commande de réglage de puissance d'émission à un équipement d'utilisateur selon un résultat de comparaison du SIRtarget du réglage de puissance de boucle interne et un rapport signal sur interférences (SIR).

11. Appareil de réglage de puissance de boucle extérieure selon la revendication 10, **caractérisé en ce que** l'appareil comprend en outre une unité de filtrage, configurée pour exécuter un traitement de filtrage sur le BER avant de juger si le BER des données est supérieur au BERtarget.

12. Appareil de réglage de puissance de boucle extérieure selon la revendication 9, **caractérisé en ce que** l'unité d'acquisition de taux d'erreurs sur les blocs et l'unité d'acquisition de BER sont configurées côté station de base (NodeB), et la première unité d'ajustement de SIRtarget et la seconde unité d'ajustement de SIRtarget sont configurées côté contrôleur de réseau radio (RNC).
